# EUROPEAN PATENT APPLICATION

(11) **EP 4 056 635 A1**
(43) Date of publication of application: **14.09.2022**
(21) Application number: 21382200.0
(22) Date of filing: 12.03.2021
(51) Int. Cl.: C08K 3/22, C08K 3/26, C08K 3/34, H01F 27/02, H01F 27/22

(54) **A THERMAL CONDUCTIVE COMPOSITION, A THERMAL CONDUCTIVE POTTING FOR SEALING A MAGNETIC POWER ASSEMBLY, A POWER TRANSFORMER ASSEMBLY AND AN ELECTRICAL VEHICLE**

(71) Applicant: PREMO, SA, 29590 Campanillas (ES)
(72) Inventor: CAÑETE CABEZA, Claudio, 29631 Benalmádena (ES); PÉREZ CAMERO, Paula, 29790 Chilches, Vélez-Málaga (ES); ROJAS CUEVAS, Antonio, 29190 Málaga (ES); NAVARRO PÉREZ, Francisco Ezequiel, 08006 Barcelona (ES)
(74) Representative: Juncosa Miró, Jaime

(57) **Abstract**

The present invention is directed to a thermal conductive composition for sealing a power assembly, comprising a mixture including a first filler, a second filler and a silicone resin. The first filler includes sepiolite and a natural mineral filler, the sepiolite being in an amount of up to 1% by weight with respect to the total amount of the thermal conductive composition, and the second filler including aluminium hydroxide. Furthermore, the present invention also relates to a power transformer assembly comprising a conductive potting and to a vehicle comprising the power transformer assembly.

## Description

### Technical Field

The present invention relates to a thermal conductive composition. The thermal conductive composition is moldable and once cured provides a thermal conductive potting particularly suitable for sealing a magnetic power assembly. The invention also relates to a power transformer assembly comprising the conductive potting, and to a vehicle comprising the power transformer assembly.

### Background of the Invention

It has been demonstrated that the removal of heat from electrical coils in electromagnetic power devices through thermal conduction allows these devices to operate more efficiently with higher output, or to provide a longer service life. That is, in order to ensure an efficient use of these electromagnetic power devices the heat generated by the operations needs to be dissipated in a timely an effective manner.

Several thermal conductive compounds are known in the art.

Patent application CN105650161 A discloses particles having large porosity and excellent heat conductivity and a method to prepare such particles. A formula implemented in the method comprises fibrous sepiolite, white vermiculite, expanded graphite, tyre powder, diatomaceous earth, carbon fibers, foam iron powder and an adhesive. Even sepiolite appears in a significant proportion in this Chinese patent application neither the composition claimed nor any described example define a composition including, at least, silicone resin and sepiolite.

Patent application CN107793765A discloses a heat conduction power bank with a sheath made of methyl vinyl silicone rubber. This patent application discloses sepiolite as a component in a thermal conductive material including methyl vinyl silicone rubber. Sepiolite, though, is described as a reinforcing filler, and not as a thermal conductivity enhancer.

Patent application JP2008195766A describes a composite material exhibiting heat conductivity and insulating properties. Said composite material comprises a filler dispersed in a resin material. In any case, no specific interaction between sepiolite and the resin is disclosed because sepiolite is just dispersed in the resin. Besides, a film made of ceramics covers the surface of the base material.

Patent application CN104496342A discloses a silicate thermal insulation coating comprising, among others, 20-35 parts of sepiolite, 1-5 parts of aluminum hydroxide and 10-30 parts of silicone resin. The purpose of this solution, though, is to obtain an insulating composition, and the proportion of sepiolite in such composition is of considerable magnitude.

Despite the cited known solutions, new thermal conductive compositions for sealing and encapsulating a power transformer assembly, or other electronic components, and that preserves the integrity of the components are still desirable. The use of these thermal compositions as sealing and encapsulating materials will provide a sealed transformer assembly with increased heat dissipation.

### Description of the Invention

To that end, embodiments of the present invention provide according to a first aspect a thermal conductive composition for sealing a magnetic power assembly, comprising a mixture including a first filler, a second filler and a silicone resin, the first filler including sepiolite and a natural mineral filler, the sepiolite being in an amount of up to 1% by weight with respect to the total amount of the thermal conductive composition, and the second filler including aluminium hydroxide.

The natural mineral filler can include one or more of finely divided following elements: quartz, quartzite, marble, sand, calcium carbonate and/or combinations thereof.

In an embodiment, the first filler is in a proportion of between 60 to 90% by weight with respect to the total weight of the thermal conductive composition.

In an embodiment, the aluminium hydroxide is in an amount of between 1 and 5% by weight with respect to the total weight of the thermal conductive composition.

In an embodiment, the sepiolite is in an amount of between 0.01 to 0,5% by weight with respect to the total weight of the thermal conductive composition. In yet another embodiment, the sepiolite is in an amount of between 0,1 to 0,15% by weight with respect to the total weight of the thermal conductive composition.

A second aspect of the invention provides a conductive potting that is obtained from the thermal conductive composition of the first aspect of the invention. In this case the silicone resin is cured, providing a thermal conductivity of 2.1 W/mK and a thermal diffusivity of 2.44E-6.

Embodiments of the present invention also provide, according to a third aspect, a power transformer assembly comprising one or more magnetic cores with (at least) first and second wound coils sealed by the conductive potting of the second aspect of the invention.

In an embodiment, the power transformer assembly comprises several magnetic units arranged inside a metallic box with magnetic cores and wound coils arranged inside cavities of the metallic box and delimited by metallic thermal conductive walls and a cover. The magnetic cores can be arranged with a central part thereof at a same level such that an isothermal gradient of temperature under working operation of the power transformer assembly is achieved. The metallic box can be made of different materials, for example aluminium, aluminium alloy or magnesium alloy with a thermal conductivity above 70 W/mK. Alternatively, in other embodiments, the walls can be made of Sintered Spark Plasma, SPS, nano-graphite having a thermal conductivity above 700 W/mK. Likewise, the metallic box can comprise openings in its base to allow an optimal heat transfer through the openings towards a dissipation element or device located in an adjacent position.

Still another aspect of the invention relates to a vehicle, in particular an electrical vehicle, comprising as part of its electrical equipment a power transformer assembly according to the third aspect of the invention.

### Brief Description of the Drawings

The previous and other advantages and features will be more fully understood from the following detailed description of embodiments, with reference to the attached figures, which must be considered in an illustrative and non-limiting manner, in which:
Fig. 1 shows an example of the proposed power transformer assembly including several magnetic units in an exploded perspective view.
Fig. 2 shows a cross-sectional view of one of the magnetic units of the power transformer assembly of FIG. 1.
Fig. 3 shows another exploded perspective view of the metallic box for loading the magnetic units of the power transformer assembly.

### Detailed Description of Preferred Embodiments

Present invention provides a thermal conductive composition made of a first filler, a second filler and a silicone resin.

The first filler particularly includes sepiolite and a natural mineral filler.

The sepiolite can be present in an amount of up to 1% by weight with respect to the total amount of the thermal conductive composition. In more specific embodiments the sepiolite can be present in an amount of between 0.01 to 0,5% by weight with respect to the total weight of the thermal conductive composition. Yet, in some embodiments, the sepiolite can be present in an amount of between 0,1 to 0,15% by weight with respect to the total weight of the thermal conductive composition.

The natural mineral filler can be any of finely divided quartz, quartzite, marble, sand, calcium carbonate and/or combinations thereof. The second filler can be made of a given amount of aluminium hydroxide or its derivatives, thus lowering the linear expansion coefficient and increasing the thermal conductivity of the silicone resin.

The thermal conductive composition once the silicone resin is cured provides a (mouldable) conductive potting that is particularly suitable for sealing and encapsulating a power transformer assembly, among other electronic components.

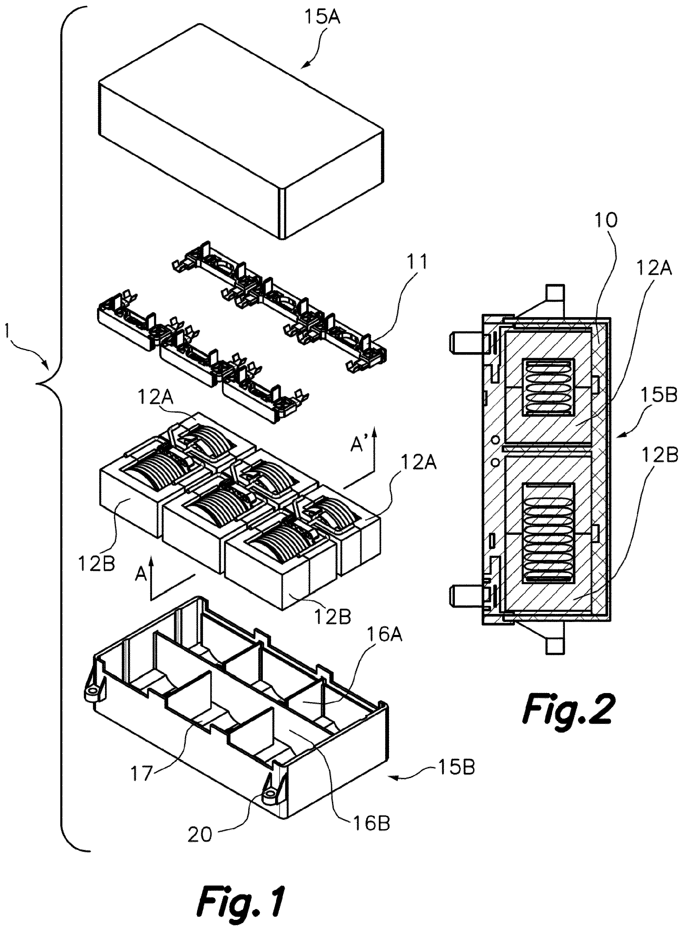

Referring to Figs. 1 and 2, an embodiment of the proposed power transformer assembly 1 is illustrated. According to this embodiment, the power transformer assembly 1 includes several magnetic cores 12A, 12B each including a first coil and a second coil wound around them (it should be noted that the power transformer assembly could comprise a single magnetic core 12A, 12B and more coils). The power transformer assembly 1 is sealed by the above-described conductive potting (illustrated as element 10). The thermal conductive composition can be injected into the power transformer assembly 1 by controlled overpressure being then cured.

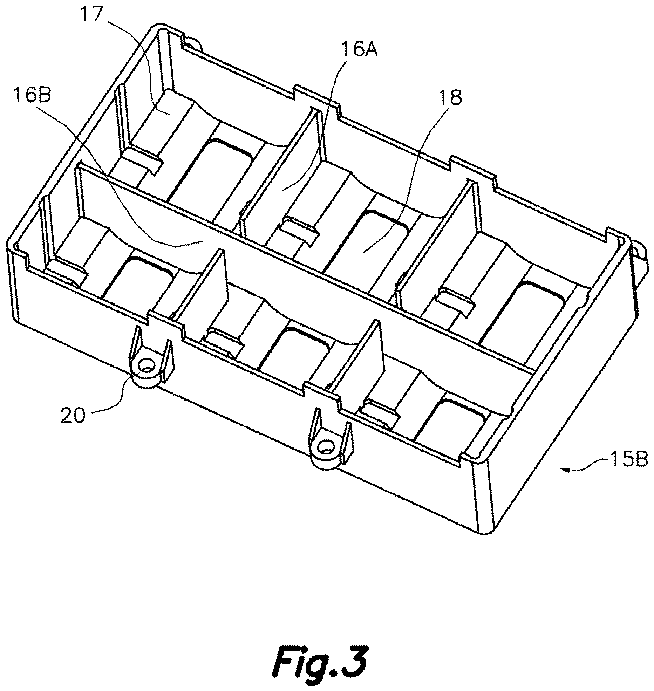

The magnetic cores 12A, 12B of this example are arranged/placed inside several cavities of a metallic box 15B (see also Fig.3 for an enlarged view of the metallic box 15B). The metallic box 15B, which can be made of any of aluminium, an aluminium alloy or a magnesium alloy, comprises metallic thermo-conductive walls 16A, 16B for enclosing/delimiting each magnetic core 12A, 12B and corresponding first and second coils and a cover 15A. It should be noted that in other embodiments the walls 16A, 16B can be made of a Sintered Spark Plasma (SPS) nano-graphite sheet. The material of the metallic box 15B particularly has a thermal conductivity above 70 W/mK. In case of using SPS nano-graphite the thermal conductivity is above 700 W/mk. As can be seen in Fig. 1, the assembly particularly also includes a stopper 11, which in this embodiment is an encapsulated electrical terminal that allows the connection of the primary/secondary windings of the magnetic unit within limits of the creepage/clearance electrical isolation. This is important in avoiding dependence on the electrical insulation of the thermal conductive composition 10 that fills the gaps in areas with a short creepage/clearance distance. In addition, the stopper 11 also contributes to securely hold the magnetic cores 12A, 12B inside each of the cavities of the metallic box 15B.

The metallic box 15B is custom designed with a base including one or more openings 18 adjusted to the tolerance of the winding area. This opening 18 allows that when the magnetic core 12A, 12B is installed attached to a liquid cooling dissipation plate, for example an Al plate, the distance from the winding to the cooling aluminium is minimal, allowing an optimal heat transfer due to a reduction of the heat transfer circuit to its minimum expression of thicknesses and materials. Thus, the losses generated in the copper (windings) are eliminated in a shorter space of time and in the most efficient way possible. Likewise, the metallic box is designed with a specifically adjusted inner raised support 17 to accommodate a homogeneous surface of the magnetic cores 12A, 12B. This inner support 17 is in direct contact with the magnetic core(s) 12A, 12B. This allows maximum heat dissipation generated by power losses in the core(s) 12A, 12B. The heat is transferred directly from the magnetic material to the metallic box 15B, and the latter then to the liquid cooling plate. The metallic box 15B includes also mounting holes 20 to attach the metallic box 15B to an installation point.

Particularly, the magnetic cores 12A, 12B are arranged in the different cavities of the metallic box 15B with a central part thereof at a same level, i.e. in a horizontal position, such that an isothermal gradient of temperature under working operation of the power transformer assembly 1 is achieved.

The scope of the present invention is defined in the following set of claims.

## Claims

1. A thermal conductive composition comprising a mixture containing a first filler, a second filler and a silicone resin, the first filler including sepiolite and a natural mineral filler, the sepiolite being in an amount of up to 1% by weight with respect to the total amount of the thermal conductive composition, and the second filler including aluminium hydroxide.

2. The thermal conductive composition of claim 1, wherein the natural mineral filler of the first filler includes one or more of finely divided following elements: quartz, quartzite, marble, sand, calcium carbonate and/or combinations thereof.

3. The thermal conductive composition according to claim 1 or 2, wherein the first filler is in a proportion of between 60 to 90% by weight with respect to the total weight of the thermal conductive composition.

4. The thermal conductive composition according to any one of the previous claims, wherein the aluminium hydroxide is in an amount of between 1 and 5% by weight with respect to the total weight of the thermal conductive composition.

5. The thermal conductive composition according to any one of the previous claims, wherein sepiolite is present in an amount comprised in a range between 0.01 to 0,5% by weight with respect to the total weight of the thermal conductive composition, and more preferably in an amount comprised in a range between 0,1 to 0,15% by weight with respect to the total weight of the thermal conductive composition.

6. A thermal conductive potting for sealing a magnetic power assembly, obtained from the thermal conductive composition of any one of the previous claims, wherein the silicone resin is cured, providing a thermal conductivity of 2.1 W/mK and a thermal diffusivity of 2.44E-6.

7. A power transformer assembly comprising at least a magnetic core (12A, 12B) with at least first and second wound coils sealed by the conductive potting according to claim 6.

8. The power transformer assembly according to claim 7, wherein it comprises several magnetic units arranged inside a metallic box (15B) with magnetic cores (12A, 12B) and wound coils arranged inside one or more cavities of the metallic box (15B) and delimited by metallic thermal conductive or Sintered Spark Plasma, SPS, nano-graphite walls (16A, 16B) and a cover (15A).

9. The power transformer assembly according to claim 8, wherein the magnetic cores (12A, 12B) of the several magnetic units are arranged with a central part thereof at a same level such that an isothermal gradient of temperature under working operation of the power transformer assembly (1) is achieved.

10. The power transformer assembly according to claims 8 or 9, wherein the metallic box (15B) is made of aluminium, an aluminium alloy, or a magnesium alloy with a thermal conductivity above 70 W/mK.

11. The power transformer assembly according to claims 8 or 9, wherein the walls (16A, 16B) are made of a SPS nano-graphite material having a thermal conductivity above 700 W/mK.

12. The power transformer assembly according to any one of claims 7 to 11, wherein the metallic box (15B) comprises openings (18) in its base assisting in a heat transfer through the openings (18) towards a dissipation element or device located in an adjacent position.

13. A vehicle comprising as part of its electrical equipment the power transformer assembly according to any one of claims 7 to 12
